# FASCICULE DE BREVET EUROPEEN

(11) **EP 1 858 298 B1**
(45) Date de publication et mention de la délivrance du brevet: **16.09.2009**
(21) Numéro de dépôt: 07301013.4
(22) Date de dépôt: 02.05.2007
(51) Int. Cl.: H05B 3/56

(54) **Cable chauffant auto-regulant**
Selbstregulierender Heizungsdraht
Self-regulating heating wire

(30) Priorité: 16.05.2006 FR 0651765
(43) Date de publication de la demande: 21.11.2007
(73) Titulaire: Nexans, 75008 Paris (FR)
(72) Inventeur: Fournier, Jérôme, 69006, Lyon (FR); Koelblin, Christian, 01800, Meximieux (FR); Festaz, Xavier, 69007, Lyon (FR)
(74) Mandataire: Feray, Valérie

(56) Documents cités:
- EP-A2- 0 880 302
- WO-A-97/17707
- LEGROS F ET AL: "CABLES AUTOREGULANTS: PRINCIPE ET UTILISATION INDUSTRIELLE" REVUE GENERALE DE L'ELECTRICITE, RGE. PARIS, FR, no. 11, 1 décembre 1989 (1989-12-01), pages 43-48, XP000074550 ISSN: 0035-3116

## Description

La présente invention concerne un câble électrique chauffant, plus particulièrement de type auto-régulant, ainsi qu'un dispositif chauffant incorporant un tel câble.

Elle s'applique typiquement mais non exclusivement au dégel ou au désenneigement des structures telles que des voies d'aéroports, des toits de maisons, et à la régulation thermique des conduits et des pipelines.

Le document EP-0 880 302 propose un câble chauffant comprenant un élément central en polymère extrudé, deux conducteurs nus agencés dans des rainures dudit élément central et affleurant à la surface de ce dernier et une couche d'un polymère semi-conducteur en contact avec lesdits conducteurs, agencée sur ledit élément central.

Lorsque les deux conducteurs sont connectés à une source de courant, le courant passe de l'un à l'autre à travers la couche de polymère semi-conducteur.

Ledit polymère semi-conducteur, polymère chargé avec une charge conductrice, a un coefficient de température positif (CTP). En cela, l'augmentation de la température dudit polymère est associée à une augmentation de sa résistivité : le polymère tend à se dilater de manière beaucoup plus importante que les charges en présence, ce qui a pour effet de séparer les particules de la charge conductrice, réduisant ainsi la puissance de chauffe du câble chauffant.

L'effet CTP permet ainsi une auto-régulation du câble et limite tout problème de surchauffe en empêchant le passage du courant de part et d'autre des conducteurs.

Cependant, ce type de câble n'est utilisable que pour une seule et unique puissance de chauffe. Pour obtenir des câbles avec des puissances de chauffe différentes, il est nécessaire, et donc contraignant, de développer des polymères à CTP spécifiques pour chaque type d'applications. Le coût et le temps pour développer différentes gammes de câbles selon l'application désirée s'en ressentent de façon significative.

L'invention vise à résoudre les problèmes de l'art antérieur en proposant un câble électrique chauffant auto-régulant facile à mettre en oeuvre et apte à fonctionner avec un seul type de polymère à CTP, pour différentes puissances de chauffe.

A cet effet, l'invention a pour objet un câble électrique chauffant comprenant au moins deux conducteurs électriques, une composition de polymère à CTP, et une gaine isolante. Chaque conducteur est entouré d'une couche de la composition de polymère à CTP, les deux conducteurs sont enroulés entre eux de façon à former une torsade, la puissance de chauffe dudit câble étant fonction du pas de ladite torsade, et la torsade est recouverte par la gaine isolante.

On entend par « composition de polymère à CTP » tout polymère chargé avec une ou plusieurs charges conductrices, présentant un coefficient de température positif.

On entend par « pas de la torsade » le nombre de tours consécutifs d'au moins deux conducteurs torsadés sur une distance donnée.

Grâce à l'invention, les câbles chauffants auto-régulants ne sont plus sur-dimensionnés, entraînant une consommation d'énergie trop élevée ou sous-dimensionnés, présentant une résistivité trop faible.

De façon surprenante, la Demanderesse a découvert que le fait de torsader des fils conducteurs entourés d'une composition de polymère à CTP permet de faire varier la puissance de chauffe du câble.

Ainsi, la puissance de chauffe désirée est obtenue avec une seule composition de polymère à CTP en déterminant au préalable le pas de torsade le plus adéquat pour l'application choisie.

Plus particulièrement, plus le pas de torsade est grand, plus la résistivité du câble est importante. Le câble évite ainsi tout risque de surchauffe en fournissant une puissance plus faible.

De plus, la fabrication des câbles chauffants conformément à l'invention est simplifiée par rapport au document de l'art antérieur précédemment cité.

En effet, il suffit d'entourer chaque câble, par exemple par extrusion, avec une couche de la composition de polymère à CTP et de torsader les conducteurs électriques pour obtenir l'effet désiré.

Dans un mode de réalisation particulièrement avantageux, la couche de la composition de polymère à CTP de chaque conducteur a une épaisseur différente.

La variation de l'épaisseur de la couche de ladite composition de polymère à CTP est un paramètre supplémentaire à celui du pas de la torsade permettant d'obtenir la puissance de chauffe souhaitée à partir d'une seule composition de polymère à CTP.

Dans un autre mode de réalisation, le pas de la torsade varie le long du câble.

Cette configuration permet d'obtenir un câble chauffant avec des puissances de chauffe différentes par zone le long dudit câble selon l'application désirée.

Dans un exemple particulier, le conducteur est un fil métallique rond massif.

Dans un autre exemple particulier, le conducteur est un fil métallique quasi-rond de type multibrins.

Selon une caractéristique de l'invention, le câble comprend en outre une gaine de protection recouvrant ladite gaine isolante.

Cette gaine de protection permet de protéger le câble contre les phénomènes d'abrasion et les agressions chimiques et thermiques.

Selon une autre caractéristique de l'invention, le câble comprend en outre un écran métallique positionné entre la gaine isolante et la gaine de protection.

Cet écran permet de protéger mécaniquement le câble et peut être relié à la terre pour éviter tout risque de court-circuit.

Selon un autre aspect, l'invention concerne un dispositif chauffant électrique comprenant au moins un câble selon l'invention.

Selon un autre aspect, l'invention concerne un procédé pour la fabrication d'un câble électrique chauffant selon l'invention comprenant les étapes suivantes :
i. revêtir chaque conducteur électrique avec une couche d'une composition de polymère à CTP,
ii. torsader lesdits conducteurs entre eux, et
iii. traiter thermiquement lesdits conducteurs torsadés.

Le traitement thermique permet de relaxer les contraintes résiduelles au niveau des points de contacts entre les conducteurs électriques, lorsque ces derniers sont torsadés, et ainsi de stabiliser la résistance éléctrique de contact.

Ledit traitement thermique consiste typiquement à chauffer durant quelques minutes le câble électrique à une température supérieure à la température de transition vitreuse de la composition de polymère à CTP et à une température inférieure à la température de fusion de la composition de polymère à CTP.

D'autres caractéristiques et avantages de la présente invention apparaîtront à la lumière des exemples qui vont suivre en référence aux dessins annotés, lesdits exemples et dessins étant donnés à titre illustratif et nullement limitatif.

La figure 1 représente une vue schématique d'un câble électrique selon l'invention.

La figure 2 représente l'évolution de la puissance de chauffe d'un câble électrique selon l'invention en fonction de la température pour deux pas de torsade différents, sous une alimentation de 40V en courant continu.

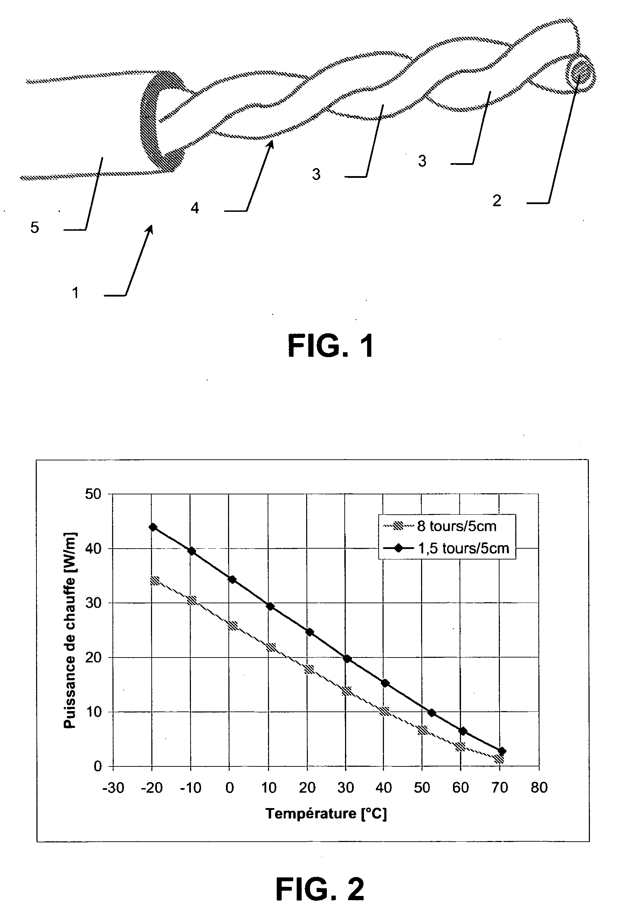

Comme représenté sur la figure 1, le câble électrique 1, conforme à l'invention, comprend deux conducteurs électriques 2 destinés à être connectés à une source de courant.

Chaque conducteur électrique est entouré d'une couche 3 d'une composition de polymère à CTP extrudé.

Tout polymère chargé ayant des propriétés mécaniques suffisantes, c'est-à-dire étant assez flexible pour être torsadé, peut être utilisé dans le cadre de l'invention.

Les polymères utilisés sont par exemple du type polyoléfine, comme le polyéthylène, le polypropylène, les copolymères d'éthylène et d'acétate de vinyle ou les copolymères d'éthylène et de propylène.

Les charges, que comprend la composition de polymère à CTP, sont une ou plusieurs charges conductrices de type noir de carbone.

Les deux conducteurs ainsi entourés sont enroulés entre eux de façon à former une torsade 4.

La torsade 4 est ensuite recouverte d'une gaine isolante 5. La gaine isolante 5 est un matériau de gainage bien connu de l'homme du métier, comme par exemple du polyéthylène.

Dans un exemple particulier (non représenté) de réalisation, la torsade, recouverte de ladite gaine isolante, est entourée par un écran métallique pour renforcer mécaniquement le câble électrique conforme à l'invention.

Cet écran métallique est par exemple du type ruban d'aluminium ou de cuivre et/ou tresse en fil de cuivre.

Cet écran métallique est entouré d'une gaine de protection pouvant être à base de polyoléfine.

Les câbles électriques selon l'invention sont utilisés principalement dans les systèmes électriques chauffant et sont du type monophasé, lorsqu'ils comportent deux conducteurs électriques, ou triphasé, lorsqu'ils comportent trois conducteurs électriques.

Dans les systèmes monophasés, le câble comporte un conducteur électrique relié à une source de courant et un conducteur électrique relié à la terre.

Dans les systèmes triphasés, le câble comporte trois conducteurs électriques reliés à une source de courant.

Conformément à l'invention, chacun de ces trois conducteurs est entouré d'une couche d'une composition de polymère à CTP, les trois conducteurs ainsi entourés étant ensuite torsadés entre eux.

Afin de montrer les avantages obtenus avec les câbles électriques chauffants selon l'invention, des essais concernant le comportement électrique desdits câbles ayant un pas de torsade différent ont été effectués.

Un conducteur en cuivre rond et massif de diamètre 1 mm est entouré d'une couche de 0,5 mm d'épaisseur d'une composition de polymère à CTP par extrusion.

La composition de polymère à CTP est à base de polyéthylène chargé avec du noir de carbone.

Deux longueurs de ce conducteur revêtu ont été prélevées et torsadées ensemble afin d'obtenir une torsade ayant un aspect régulier et homogène.

Un premier et un second câbles présentent respectivement un pas de torsade de 1,5 tours/5 cm et de 8 tours/5cm pour une longueur totale de câble de 50 cm.

Une gaine isolante de type gaine thermo-rétractable est appliquée sur chaque torsade.

Les câbles électriques ainsi constitués sont placés dans une enceinte climatique.

L'évolution de la puissance de chauffe en fonction de la température de l'enceinte climatique est représentée sur la figure 2.

La température de l'enceinte climatique est régulée de façon à rester constante, même si le câble chauffe lorsque ledit câble est sous tension.

La puissance de chauffe est déduite simplement de la mesure de la résistance en utilisant un dispositif classique fonctionnant en courant continu, du type voltmètre et ampèremètre connectés audits câbles électriques.

La résistance des premier et second câbles a été mesurée en mode chauffant, c'est-à-dire qu'une tension continue de 40V leur a été appliquée.

Le courant traverse ainsi les couches de la composition de polymère à CTP et les chauffe.

Il est clairement montré, selon la figure 2, que les câbles selon l'invention ont des comportements différents en termes de puissance de chauffe en fonction du pas de la torsade.

En particulier, plus le pas de la torsade est important, c'est-à-dire plus le nombre de tours consécutifs des deux conducteurs torsadés sur une distance donnée est grand, plus la puissance de chauffe du câble diminue pour une température donnée, notamment à des températures inférieures à 20°C.

La présente invention n'est pas limitée à l'exemple de mise en oeuvre qui vient d'être décrit et porte dans sa généralité sur tous les câbles envisageables à partir des indications générales fournies dans l'exposé de l'invention.

Notamment, chaque conducteur électrique peut être revêtu par enduction d'une couche de polymère à CTP.

## Revendications

1. Câble électrique chauffant comprenant :
- au moins deux conducteurs électriques,
- une composition de polymère à coefficient de température positif (CTP), et
- une gaine isolante,
**caractérisé en ce que**
- chaque conducteur est entouré d'une couche de la composition de polymère à CTP,
- les deux conducteurs sont enroulés entre eux de façon à former une torsade, la puissance de chauffe dudit câble étant fonction du pas de ladite torsade, et
- la torsade est recouverte par la gaine isolante.

2. Câble selon la revendication 1, **caractérisée en ce que** la couche de la composition de polymère à CTP de chaque conducteur à une épaisseur différente.

3. Câble selon la revendication 1 ou 2, **caractérisée en ce que** le pas de la torsade varie le long du câble.

4. Câble selon l'une quelconque des revendications 1 à 3, **caractérisé en ce que** le conducteur est un fil métallique rond massif.

5. Câble selon l'une quelconque des revendications 1 à 4, **caractérisé en ce que** le conducteur est un fil métallique quasi-rond de type multibrins.

6. Câble selon l'une quelconque des revendications 1 à 5, **caractérisé en ce que** le câble comprend en outre une gaine de protection entourant ladite gaine isolante.

7. Câble selon l'une quelconque des revendications 1 à 6, **caractérisé en ce que** le câble comprend en outre un écran métallique positionné entre la gaine isolante et la gaine de protection.

8. Dispositif chauffant électrique comprenant au moins un câble selon l'une quelconque des revendications 1 à 7.

9. Procédé pour la fabrication d'un câble électrique chauffant selon l'une quelconque des revendications 1 à 7 comprenant les étapes suivantes :
i. revêtir chaque conducteur électrique avec une couche d'une composition de polymère à CTP,
ii. torsader lesdits conducteurs entre eux, et
iii. traiter thermiquement lesdits conducteurs torsadés.

## Claims

1. An electric heater cable comprising:
• at least two electrical conductors;
• a polymer composition having a positive temperature coefficient (PTC); and
• an insulating sheath;
the cable being **characterized in that**:
• each conductor is embedded in a layer of the PTC polymer composition;
• the two conductors are twisted together to form a twist, the heating power of said cable being a function of the pitch of said twist; and
• the twist is covered by the insulating sheath.

2. A cable according to claim 1, **characterized in that** the layer of PTC polymer composition on each conductor is of a different thickness;

3. A cable according to claim 1 or claim 2, **characterized in that** the pitch of the twist varies along the cable.

4. A cable according to any one of claims 1 to 3, **characterized in that** the conductor is a solid round metal wire.

5. A cable according to any one of claims 1 to 4, **characterized in that** the conductor is a multistrand quasi-round metal wire.

6. A cable according to any one of claims 1 to 5, **characterized in that** the cable further includes a protective sheath surrounding said insulating sheath.

7. A cable according to any one of claims 1 to 6, **characterized in that** the cable further includes a metal shield positioned between the insulating sheath and the protective sheath.

8. An electric heater device including at least one cable according to any one of claims 1 to 7.

9. A method of fabricating an electric heater cable according to any one of claims 1 to 7, the method comprising the following steps:
i) embedding each electrical conductor in a layer of a PTC polymer composition;
ii) twisting said conductors together; and
iii) applying heat treatment to said twisted conductors.

## Patentansprüche

1. Elektrisches Heizkabel, umfassend:
- mindestens zwei elektrische Leiter,
- eine Polymerzusammensetzung mit positivem Temperaturkoeffizienten (CTP), und
- eine Isolierhülle,
**dadurch gekennzeichnet, dass**
- jeder Leiter von einer Schicht der CTP-Polymerzusammensetzung umgeben ist,
- die beiden Leiter miteinander aufgerollt sind, um eine Litze zu bilden, wobei die Heizleistung des Kabels vom Drall der Litze abhängig ist, und
- die Litze von der Isolierhülle überzogen ist.

2. Kabel nach Anspruch 1, **dadurch gekennzeichnet, dass** die Schicht der CTP-Polymerzusammensetzung jedes Leiters eine unterschiedliche Dicke hat.

3. Kabel nach Anspruch 1 oder 2, **dadurch gekennzeichnet, dass** der Drall der Litze an dem Kabel entlang variiert.

4. Kabel nach einem der Ansprüche 1 bis 3, **dadurch gekennzeichnet, dass** der Leiter ein massiver runder Metalldraht ist.

5. Kabel nach einem der Ansprüche 1 bis 4, **dadurch gekennzeichnet, dass** der Leiter ein fast runder Metalldraht mehrdrähtiger Art ist.

6. Kabel nach einem der Ansprüche 1 bis 5, **dadurch gekennzeichnet, dass** das Kabel ferner eine Schutzhülle umfasst, welche die Isolierhülle umgibt.

7. Kabel nach einem der Ansprüche 1 bis 6, **dadurch gekennzeichnet, dass** das Kabel ferner eine Metallabschirmung umfasst, die zwischen der Isolierhülle und der Schutzhülle angeordnet ist.

8. Elektrische Heizvorrichtung, umfassend mindestens ein Kabel nach einem der Ansprüche 1 bis 7.

9. Verfahren zur Herstellung eines elektrischen Heizkabels nach einem der Ansprüche 1 bis 7, umfassend folgende Schritte:
i) Überziehen jedes elektrischen Leiters mit einer Schicht einer CTP-Polymerzusammensetzung,
ii) Verlitzen der Leiter untereinander, und
iii) Wärmebehandeln der verlitzten Leiter.
